Europäisches Patentamt

European Patent Office

Office européen des brevets

(11) Publication number : **0 506 556 A2**

# (12) EUROPEAN PATENT APPLICATION

(21) Application number : **92400808.9**

(22) Date of filing : **25.03.92**

(51) Int. Cl.⁵ : **G11B 31/00, G11B 25/10**

(30) Priority : **27.03.91 KR 480791**

(43) Date of publication of application :
**30.09.92 Bulletin 92/40**

(84) Designated Contracting States :
**DE FR GB**

(71) Applicant : **GOLDSTAR CO. LTD.**
**20, Yoido-Dong Yongdungpo-Ku**
**Seoul (KR)**

(72) Inventor : **Kim, Jong Hoon**
**632-71, Banghak 2-Dong, Dobong-ku**
**Seoul (KR)**

(74) Representative : **Fort, Jacques**
**CABINET PLASSERAUD 84, rue d'Amsterdam**
**F-75009 Paris (FR)**

(54) **System having disk player and video cassette recorder in an integral type.**

(57)    A system having a disk player and a VCR in an integral type, including a VCR deck for performing recording/playback on a video tape, a disk player deck for per-forming a multi-disk play-back of a laser disk, a compact video disk and a compact disk, a common housing for containing the VCR deck and the disk player deck therein, and a signal interface circuit for selecting an input signal to the VCR deck and an output video signal from the system in accordance with the selection of the user and enabling a signal interface between the VCR deck and disk player deck such that they can operate individually. According to the present invention, playback signals from a multiplicity of disks can readily be copied and dubbed into the video tape simultaneously with output of a television broadcasting signal through a monitor. Also, a variety of functions can easily be embodied which could not be performed by the disk player alone or the VCR system alone.

EP 0 506 556 A2

Jouve, 18, rue Saint-Denis, 75001 PARIS

## BACKGROUND OF THE INVENTION

### Field of the Invention

The present invention relates in general to a system having a disk player and a video cassette recorder, referred hereinafter to as VCR, in an integral type, and more particularly to a system having a disk player and a VCR in an integral type, which contains a VCR deck and a disk player deck within its single housing so that audio/video playback signals from a multiplicity of disks can readily be copied and dubbed into a video tape and the user can select freely audio/video sources while watching a television broadcasting through a monitor, in order to perform a recording by the VCR deck.

### Description of the Prior Art

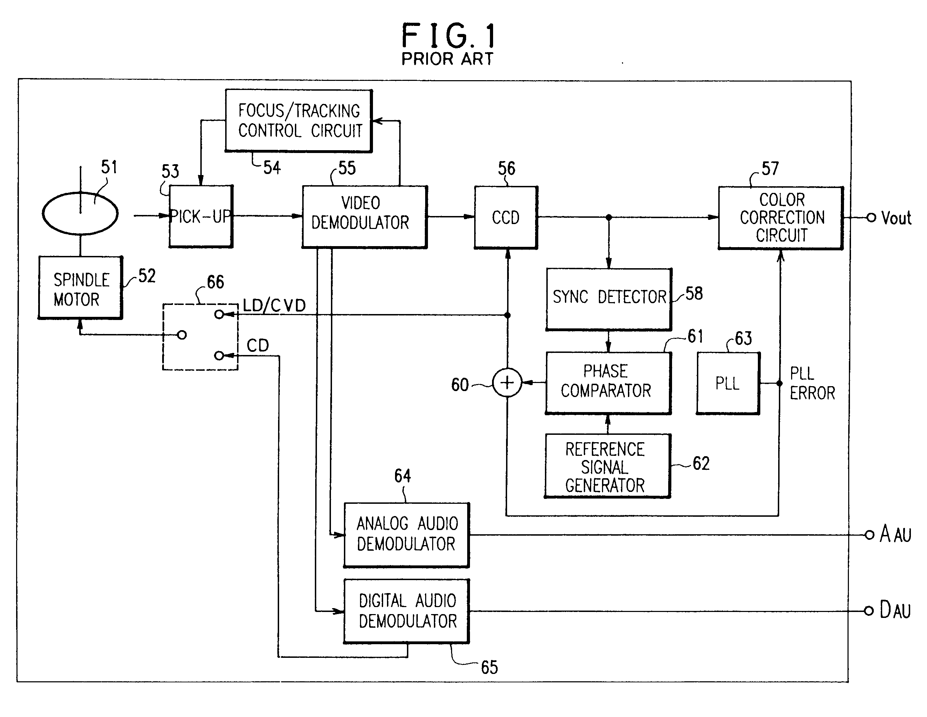

Referring to Fig. 1, there is shown a circuit diagram of a conventional playback dedicated compact disk player. As shown in the drawing, the disk player includes a pick-up 53 which gains access to a disk 51 which is rotated by the rotation of a spindle motor 52, so as to read information recorded on the disk 51. The information read by the pick-up 53 is demodulated into a video signal and an audio signal by a video demodulator 55.

The video demodulator 55 outputs a focus state signal based on an intensity of a signal detected by the pick-up 53, to a focus/tracking control circuit 54. In accordance with the focus state signal from the video demodulator 55, the focus/tracking control circuit 54 controls focus and tracking of the pick-up 53. Then, under an adjustment of the focus and tracking by the circuit 54, the pick-up 53 reads information recorded on the disk 51. On the other hand, the demodulated video signal from the video demodulator 55 is outputted as a video output signal Vout through a charge coupled device (CCD) 56 and a color correction circuit 57.

There is also provided a synchronous signal detector 58 which detects vertical and horizontal synchronous signals from an output signal from the CCD 56. The vertical and horizontal synchronous signals from the synchronous signal detector 58 are phase-compared with a reference signal by a phase comparator 61, the reference signal being generated from a reference signal generator 62. Upon detection of a phase error signal by the phase comparison in the phase comparator 61, the phase error signal from the phase comparator 61 is inputted to a phase controller (PLL) 63 which then generates a correction signal based on the phase error signal. The correction signal from the phase controller 63 is applied as a correction control signal to the color correction circuit 57. The output signal from the phase controller 63 and the output signal from the phase comparator 61 are added in an adder 60 which then applies the added signal as a control signal to the CCD 56 and also as an LD/CVD mode control signal for the spindle motor 52 to a control signal switching circuit 66.

On the other hand, an analog audio signal of the audio signal from the video demodulator 55 is demodulated by an analog audio demodulator 64 which then outputs the demodulated analog audio signal as an analog audio output signal AAu. Also, a digital audio signal of the audio signal from the video demodulator 55 is demodulated by a digital audio demodulator 65 which then outputs the demodulated digital audio signal as a digital audio output signal DAu. Also, the digital audio demodulator 65 outputs a CD mode control signal for the spindle motor 52 to the control signal switching circuit 66. The control signal switching circuit 66 selects the LD/CVD mode control signal or the CD mode control signal for the spindle motor 52 in accordance with an operating mode, and applies the selected control signal as a drive control signal to the spindle motor 52. The spindle motor 52 is thus controlled in its rotation speed by the drive control signal according to the operating mode, thereby enabling a multi-disk playback of the LD, CVD and CD.

In the disk player applications, there has been desired a copy or dubbing of the audio/video signals recorded on the disk into a video tape because of an excellency in image quality and sound quality of the LD, CVD and CD capable of playback. In order to perform the copy of dubbing, however, there are necessarily required both the disk player and a VCR system. A work for coupling the disk player with the VCR system in a line causes inconvenience in use.

## SUMMARY OF THE INVENTION

Therefore, it is an object of the present invention to provide a system having a disk player and a VCR in an integral type, which contains a VCR deck and a disk player deck within its single housing so that audio/video playback signals from a multiplicity of disks having a high quality of sound and image characteristics can readily be copied and dubbed into a video tape and the user can select freely audio/video sources while watching a television broadcasting through a monitor, so as to perform a recording by the VCR deck.

In accordance with the present invention, the above object can be accomplished by providing a system having a disk player and a VCR in an integral type, comprising: a VCR deck for performing recording/playback on a video tape; a disk player deck for performing a multi-disk playback of a laser disk, a compact disk video and a compact disk; a common housing for containing the VCR deck and the disk player deck therein; and a signal interfacing circuit for selecting an input signal to the VCR deck and an output video signal from the system in accordance with a selection of the user and enabling a signal interface between the VCR deck and disk player deck such that they can operate individually.

## BRIEF DESCRIPTION OF THE DRAWINGS

The above and other objects, features and advantages of the present invention will be more clearly understood from the following detailed description taken in conjunction with the accompanying drawings, in which:

Fig. 1 is a circuit diagram of a conventional playback dedicated compact disk player,

Fig. 2 is a circuit diagram of a system having a disk player and a VCR in an integral type, in accordance with the present invention; and

Fig. 3 is a perspective view of the system in Fig. 2, in accordance with the present invention.

## DESCRIPTION OF THE PREFERRED EMBODIMENTS

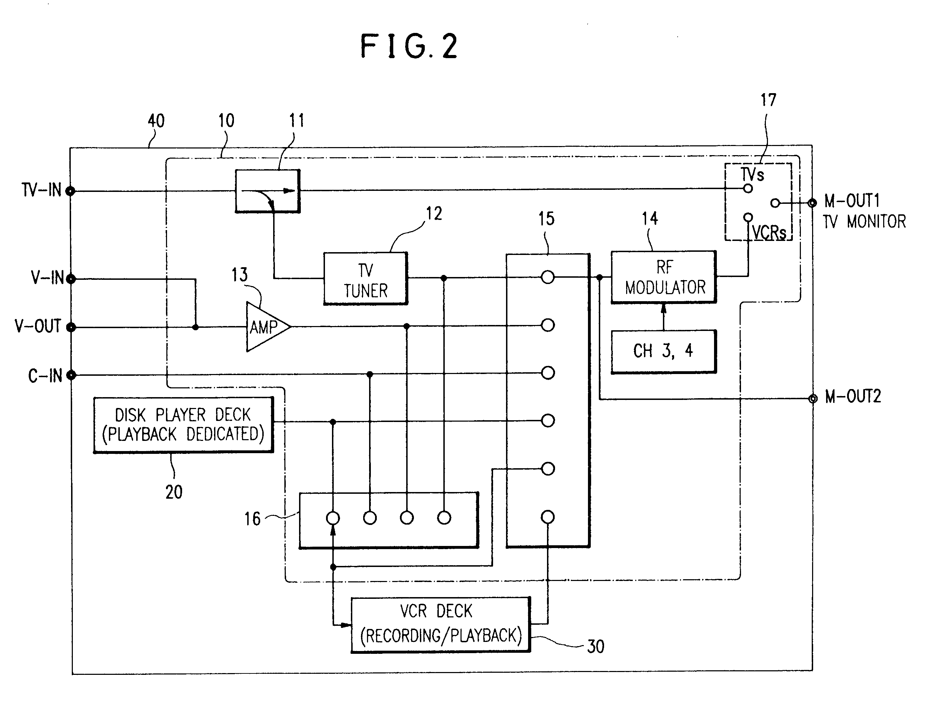

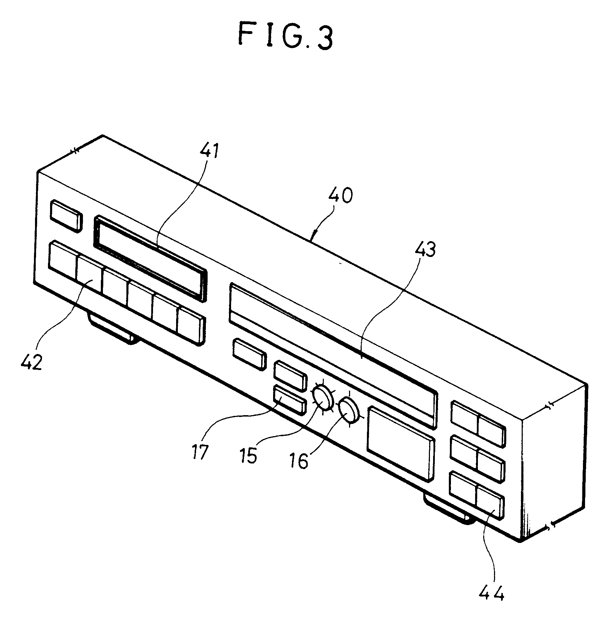

Referring to Figs. 2 and 3, there are shown a circuit diagram and a perspective view of a system having a disk player and a VCR in an integral type, in accordance with the present invention. As shown in these drawings, the present system includes a VCR deck 30 for performing recording/playback on a video tape, a disk player deck 20 for performing a multi-disk (MD) playback of a laser disk (LD), a compact video disk (CVD) and a compact disk (CD), a common housing 40 for containing the VCR deck 30 and the disk player deck 20 therein, and a signal interface circuit 10 for selecting an input signal to the VCR deck 30 and an output video signal from the system in accordance with a selection of the user and enabling a signal interface between the VCR deck 30 and the disk player deck 20 such that they can operate individually.

Herein, the video signal is referred to as a signal including an audio signal and a video signal.

The signal interface circuit 10 includes a radio frequency (RF) signal splitter 11 for splitting a broadcasting signal inputted through a television (TV) antenna jack TV-IN connected to a TV antenna into two paths, a TV tuner 12 for tuning the TV broadcasting signal from the RF signal splitter 11 to a corresponding channel, an isolation amplifier 13 for inputting an external video signal from an external video input jack V-IN, a VCR deck input select switch 16 for selecting one of a TV signal 1 from the TV tuner 12, an external video signal 2 from the isolation amplifier 13, a camera video signal 3 through a camera jack C-IN connected to a camera and a disk playback signal 4 from the disk player deck 20 and applying the selected signal as a recording input signal 5 to the VCR deck 30, a video signal output select switch 15 for selecting one of the TV signal 1, the external video signal 2, the camera video signal 3, the disk playback signal 4, the VCR recording input signal 5 and a VCR playback signal 6 from the VCR deck 30 and outputting the selected signal to a monitor through a monitor output jack M-OUT2, an RF modulator 14 for modulating the output signal from the video signal output select switch 15 into an RF video signal VCRs under a select control of VCR output channels CH3-4, and a monitor output select switch 17 for selecting one of the RF video signal VCRs from the RF modulator 14 and the broadcasting signal TVs outputted directly from the RF signal splitter 11 and outputting the selected signal directly to a TV monitor through a TV monitor output jack M-OUT1.

Herein, the reference numerals 41 and 43, not described, designate doors for inserting the video cassette tape and the disk, respectively. Also, the reference numerals 42 and 44, not described, designate VCR deck and disk player deck operating parts, respectively. On the other hand, the monitor output jack M-OUT2, which is directly connected to the output terminal of the video signal output select switch 15, is an auxiliary output jack for functioning to output only audio signal in the CD playback or video/audio signals to other monitors and VCR systems.

Now, the operation of the system with the above-mentioned construction in accordance with the present invention will be described in detail.

The disk player deck 20, which is applied to the invention, may be a deck of multi-disk player (MDP) capable of playing-back of a laser disk (LD), a compact disk (CD) and a compact video disk (CVD). Also, the VCR deck 30 may be a deck of a VCR capable of recording/playing-back of a generic video cassette tape.

The disk player deck 20 and the VCR deck 30 are disposed in the single housing 40 such that they can operate individually. The TV antenna jack TV-IN in Fig. 2 is connected to the TV antenna to receive a TV broadcasting signal therefrom. The external video input jack V-IN is connected to a video output jack of an external VCR system to receive a video signal therefrom. The external video output jack V-OUT is connected to another external video system to output the external video signal inputted through the external video input jack V-IN directly thereto. The camera input jack C-IN is connected directly to a video signal output jack of a VCR camera to receive the camera video signal 3 therefrom.

On the other hand, when the user operates the VCR deck input select switch 16, which is disposed on the front panel of the common housing 40, to select an input signal to the VCR deck 30, a desired source can be recorded on the video tape. Also, if the user operates the monitor output select switch 17 after operating the video signal output select switch 15 to select an output video signal, the broadcasting signal TVs received through the antenna is outputted directly to the TV monitor, or the RF video signal VCRs selected by the video signal output select switch 15 is outputted to the TV monitor.

In case where the user wishes to record the disk playback signal 4 on the video tape through the VCR deck 30 while playing back the disk through the disk deck 20 to output the disk playback signal 4 to the TV monitor, this can be achieved by switching the monitor output select switch 17 to select the output signal from the RF modulator 14, switching the video signal output select switch 15 to select the disk playback signal 4 from the disk player deck 20 and switching the VCR deck input select switch 16 to select the disk playback signal 4. In this case, the disk playback signal 4, which is obtained by playing back the disk (CVD or LD) through the disk player deck 20, is selected by the video signal output select switch 15 and is RF-modulated by the RF modulator 14 and then the RF-modulated disk playback signal is outputted by the monitor output select switch 17 to the TV monitor. Also, the disk playback signal 4 is inputted to the VCR deck 30 for its recording on the video tape.

In another case where the user wishes to record the TV broadcasting signal of one channel through the VCR deck 30 simultaneously with the output of the disk playback signal 4 to the TV monitor, this can be achieved by switching the monitor output select switch 17 to select the output signal from the RF modulator 14, switching the video signal output select switch 15 to select the disk playback signal 4 from the disk player deck 20 and switching the VCR deck input select switch 16 to select the TV signal 1 from the tuner 12. In this case, the TV signal 1 from the tuner 12 is inputted to the VCR deck 30 for its recording on the video tape and the disk playback signal 4 from the disk player deck 20 is outputted to the TV monitor.

Also, when the user would like to record the disk playback signal 4 on the video tape through the VCR deck 30 simultaneously with the output of the TV signal 1 to the TV monitor, this can be achieved by switching the monitor output select switch 17 to select the output signal from the RF modulator 14, switching the video signal output select switch 15 to select the TV signal 1 from the tuner 12 and switching the VCR deck input select switch 16 to select the disk playback signal 4 from the disk player deck 20.

In this manner, the user operates the VCR deck input select switch 16 to select as a recording input signal to the VCR deck 30 one of the TV signal 1, the external video input signal 2, the camera video signal 3 and the disk playback signal 4 from the disk player deck 20. At the same time, the user operates the video signal output select switch 15 to select one of the TV signal 1, the external video signal 2, the camera video signal 3, the disk playback signal 4, the VCR recording input signal 5 and the VCR playback signal 6 from the VCR deck 30, independent of the recording input signal to the VCR deck 30. Then, the video signal selected by the video signal output select switch 15 is RF-modulated by the RF modulator 14 and the RF-modulated video signal is then outputted to the TV monitor in accordance with a selection of the monitor output select switch 17.

As hereinbefore described, in accordance with the present invention, there is provided the system having a hardware which contains the VCR deck and the disk player deck within its single housing such that they can operate individually and the signal interfacing therebetween is made enable. Therefore, the playback signals from a multiplicity of disk can readily be copied and dubbed into the video tape simultaneously with the output of the television broadcasting signal through the monitor. Also, according to the present invention, a variety of functions can easily be embodied which could not been performed by the disk player alone or the VCR system alone.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A system having a disk player and a VCR in an integral type, comprising:

   a VCR deck for performing recording/playback on a video tape;

   a disk player deck for performing a multi-disk playback of a laser disk, a compact video disk and a compact disk;

   a common housing for containing said VCR deck and said disk player deck therein; and

   signal interfacing means for selecting an input signal to said VCR deck and an output video signal from the system in accordance with a selection of the user and enabling a signal interface between said VCR deck and disk player deck such that they can operate individually.

2. The system as claimed in claim 1, wherein said signal interfacing means includes:

   an RF signal splitter for splitting a broadcasting signal inputted through a TV antenna jack into two paths;

   a TV tuner for tuning the TV broadcasting signal from said RF signal splitter to a corresponding channel;

   an isolation amplifier for inputting an external video signal from an external video input jack;

   a VCR deck input select switch for selecting one of a TV signal from said TV tuner, an external video signal from said isolation amplifier, a camera video signal through a camera jack and a disk playback signal from said disk player deck and applying the selected signal as a recording input signal to said VCR deck;

a video signal output select switch for selecting one of the TV signal, the external video signal, the camera video signal, the disk playback signal, the VCR recording input signal and a VCR playback signal from said VCR deck;

an RF modulator for modulating the output signal from said video signal output select switch into an RF video signal; and

a monitor output select switch for selecting one of the video signal from said RF modulator and the TV broadcasting signal outputted directly from said RF signal splitter and outputting the selected signal to a TV monitor.

# FIG.1
PRIOR ART

# FIG.2

EP 0 506 556 A2

# FIG.3